# EUROPEAN PATENT SPECIFICATION

(11) **EP 2 131 568 B1**
(45) Date of publication and mention of the grant of the patent: **19.12.2012**
(21) Application number: 09161759.7
(22) Date of filing: 03.06.2009
(51) Int. Cl.: H04N 5/00, H04N 5/44, H04N 21/438, H04N 21/434, H04N 21/4385, H04N 21/426

(54) **Digital broadcast receiver**
Digitaler Rundfunkempfänger
Récepteur de radiodiffusion numérique

(30) Priority: 03.06.2008 JP 2008145259
(43) Date of publication of application: 09.12.2009
(73) Proprietor: Hitachi, Ltd., Tokyo 100-8280 (JP)
(72) Inventor: Yonekawa, Akira, Tokyo 100-8220 (JP); Tomita, Naofumi, Tokyo 100-8220 (JP); Yamamoto, Kazumichi, Tokyo 100-8220 (JP); Higashijima, Shigeki, Tokyo 100-8220 (JP); Ishiguro, Masao, Tokyo 100-8220 (JP)
(74) Representative: Erny, Tobias

(56) References cited:
- JP-A- 2004 312 629
- US-A- 6 016 172
- US-A1- 2005 163 163

## Description

### BACKGROUND OF THE INVENTION

### (1) Field of the Invention

The present invention relates to a digital broadcasting receiving device that speeds up channel selection time and increases memory use efficiency.

### (2) Description of the Related Art

A conventional digital broadcast receiver acquires packet identifiers (hereinafter referred to as PIDs) of program specific information (hereinafter referred to as PSI) such as a program association table (hereinafter referred to as PAT) and a program map table (hereinafter referred to as PMT) of channel selection information required in channel selection processing and elementary stream (hereinafter referred to as ES) of video and audio, and acquires video and audio packets, in sequential processing as described below.
(1) On entering the channel selection processing, it first acquires PAT inserted in a transport stream (hereinafter referred to as TS) outputted from a tuner. (2) It acquires PID of PMT corresponding to a service targeted for channel selection from PAT. (3) It uses the PID to acquire PID of video and audio ES from the acquired PMT. (4) It first acquires format information (video resolution, aspect ratio, audio sampling frequency, etc.) from the ES. (5) After the acquisition, it continues to perform decoding, and releases muting on generation of video and audio that can be outputted.

The conventional channel selection processing described above, depending on the timing to acquire channel selection information, must have waited for retransmission of it and has taken much time for channel selection processing.

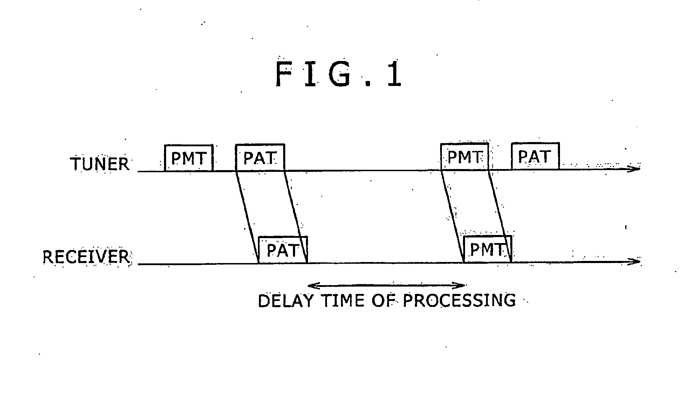

For example, when acquiring a packet, the tuner, without using PMT acquired before PAT as shown in FIG. 1, must wait until acquiring the next PMT. As a result, a delay occurs in the channel selection processing. Accordingly, a technique described below is disclosed in Japanese Patent Application Laid-Open Publication No.2004-312629. According to this technique, a packet acquired by a tuner during channel selection is cached in memory and PMT at that time is not wasted to select a channel quickly.

### BRIEF SUMMARY OF THE INVENTION

With the above-described technique, much information could be stored in memory during channel selection processing, so that a large-capacity memory must be mounted in advance. Moreover, disadvantageously, the acquisition of PAT must be awaited to start decoding, with the result that extra time is required.

Accordingly, the present invention provides a digital broadcast receiver capable of curbing memory consumption and shortening time required for channel selection processing.

To solve the above-described problem, the present invention provides a digital broadcast receiver having the features of claim 1. According to another aspect, a digital broadcast receiver includes: data input means that inputs digital data containing program specific information; packet splitting means that splits inputted digital data in units of transport stream packets for transfer; tuner stability checking means that checks the ratio between normal packets and corrupt packets of acquired transport stream packets, or time measuring means that measures time for a specific period of time; stream constitution checking means that checks a bit rate by PID in the transport streams; a stream cache memory that stores specific transport stream packets acquired from the data input means; stream control means that determines when to acquire which of the packets acquired from the data input means that transfers to the stream cache memory and a decoder; an A/V decoder that decodes video information; and mute control means that outputs the decoded information to users. After channel selection processing is started, when the tuner is unstable, the stream control means estimates the identifier of a video packet from the ratio and bit rate even when information necessary for channel selection is not acquired. According to the construction employing the timer, the digital broadcast receiver checks packet identifiers for a specific period of time, and estimates the identifiers of video packets even when information necessary for channel selection is not acquired.

Furthermore, the stream control means determines when to store and output which transport packet, to curb memory consumption. The stream control means sends video packets to the decoder when information necessary for channel selection is not acquired, to perform decoding in advance.

By curbing the consumption of memory necessary to speed up channel selection processing, the capacity of memory mounted can be reduced. Moreover, since decoding can be started in advance, channel selection processing can be sped up.

### BRIEF DESCRIPTION OF THE DRAWINGS

FIG. 1 illustrates a case where a tuner acquires PMT before PAT;
FIG. 2 illustrates a construction of a digital broadcast receiver by this technique;

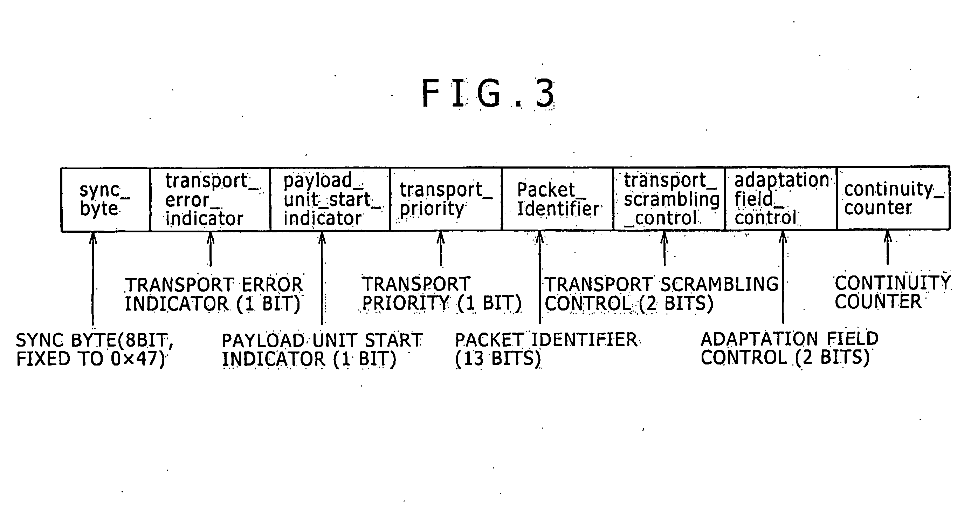

FIG. 3 illustrates the format of a TS packet header;
FIG. 4 illustrates the relationship between the types of packets stored in stream cache memory and time;
FIG. 5 illustrates a processing flow of stream cache control;
FIG. 6 is a drawing illustrating the state of a case where PAT and PMT have been acquired until a tuner becomes stable;
FIG. 7 is a drawing illustrating the state of a case where only PAT has been acquired until a tuner becomes stable;
FIG. 8 illustrates the state of a case where PMT containing video PID has been acquired earlier;
FIG. 9 illustrates the layout of a stream cache memory;
FIG. 10 illustrates a processing flow of other stream cache control;
FIG. 11 illustrates the state of a case where PAT and PMT have been acquired until another tuner becomes stable; and
FIG. 12 illustrates an example of a construction employing a timer.

### DETAILED DESCRIPTION OF THE INVENTION

Hereinafter, embodiments of the present invention will be described with reference to the drawings.

### First Embodiment

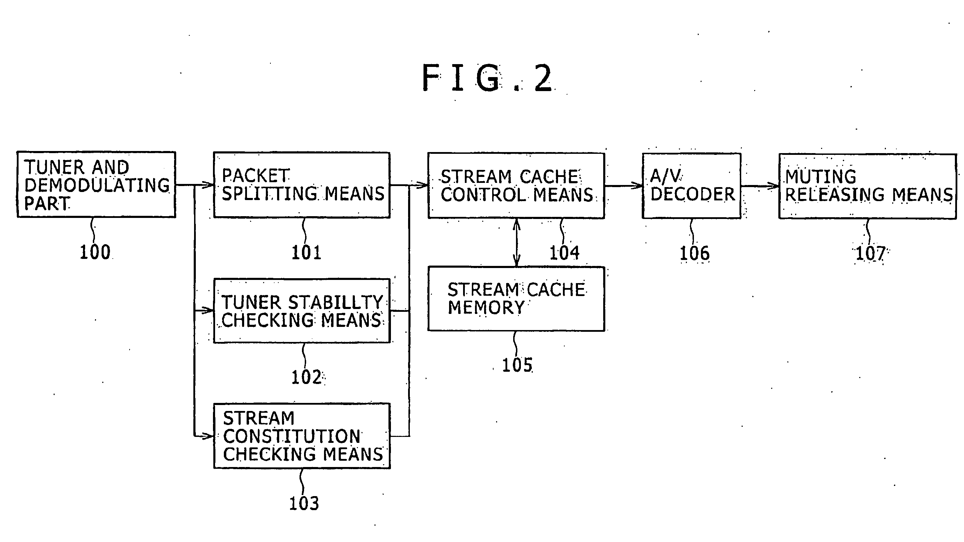

FIG. 2 shows a block diagram of a digital broadcast receiver relating to a first embodiment of the present invention. The digital broadcast receiver relating to the first embodiment of the present invention includes: a tuner and demodulating part 100; a packet splitting means 101; a tuner stability checking means 102; a stream constitution checking means 103; a stream cache control means 104; a stream cache memory 105; an audio/video decoder 106; and a muting releasing means 107.

The tuner and demodulating part 100 demodulates a broadcast signal transmitted with an analog modulation wave into TS. The TS includes a stream of one or more videos and audios, caption information, data broadcast, and the like. The TS is subdivided into TS packets in units of 188 bytes for transmission. During the demodulating, when the broadcast signal is not correctly demodulated, the bit of "transport error indicator" is set to the true "1."

The packet splitting means 101 splits the TS packets into information (PAT, PMT, etc.), video/audio ES, and the like necessary for channel selection by the value of PID. Although the PAT of information necessary for channel selection has the value of PID fixed to 0, the PID of the video/audio ES can be arbitrarily specified by broadcasting stations.

The tuner stability checking means 102 checks "sync byte" and "transport error indicator" of a TS packet acquired from the tuner, and determines the number of normal packets and the number of corrupt packets.

The stream constitution checking means 103 checks the PIDs of normal packets acquired from the tuner for a specific period of time to determine the ratio of them. The bit rate of a packet by the PID can be estimated from the ratio and the number of normal packets acquired from the tuner stability checking means 102. The PID of video ES is estimated from the bit rate by the PID and bit arrangement indicating ES.

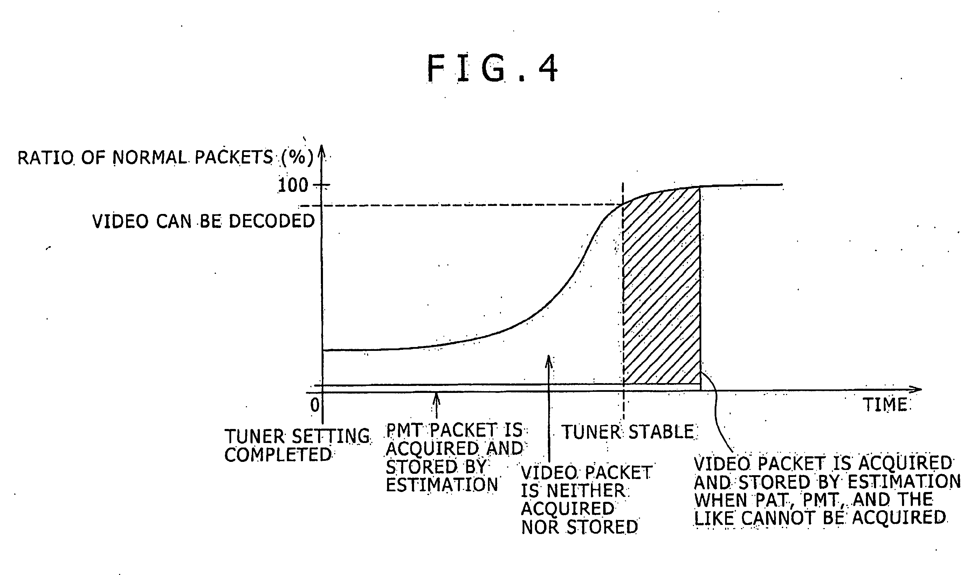

The stream cache control means 104 determines by the tuner stability checking means 102 described previously when to store which packet in the stream cache memory, and when acquiring a relevant packet at relevant time, transfers the packet to the stream cache memory 105. FIG. 4 shows the relationship between the types of packets stored in the stream cache memory during the processing and time.

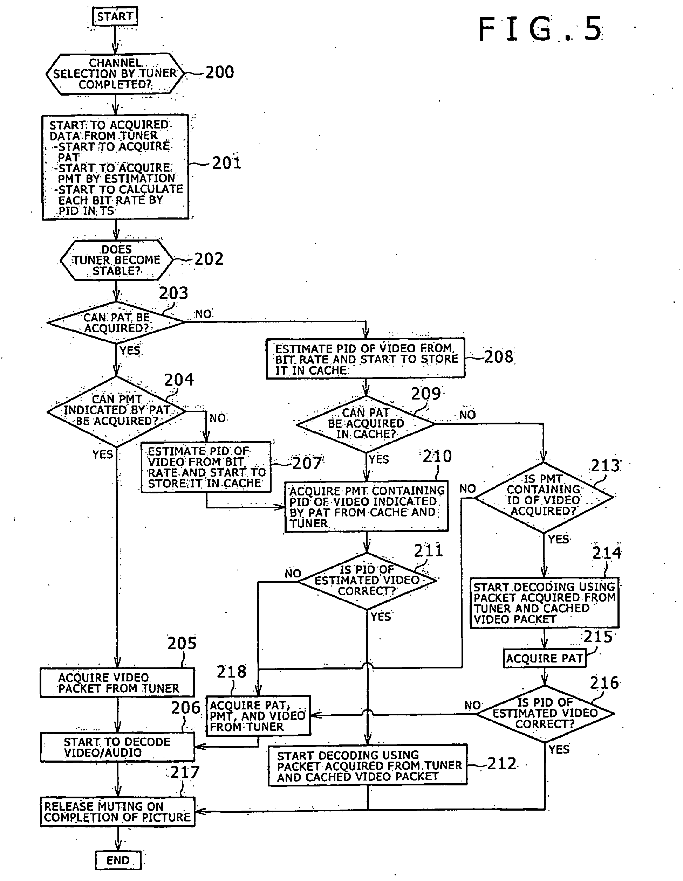

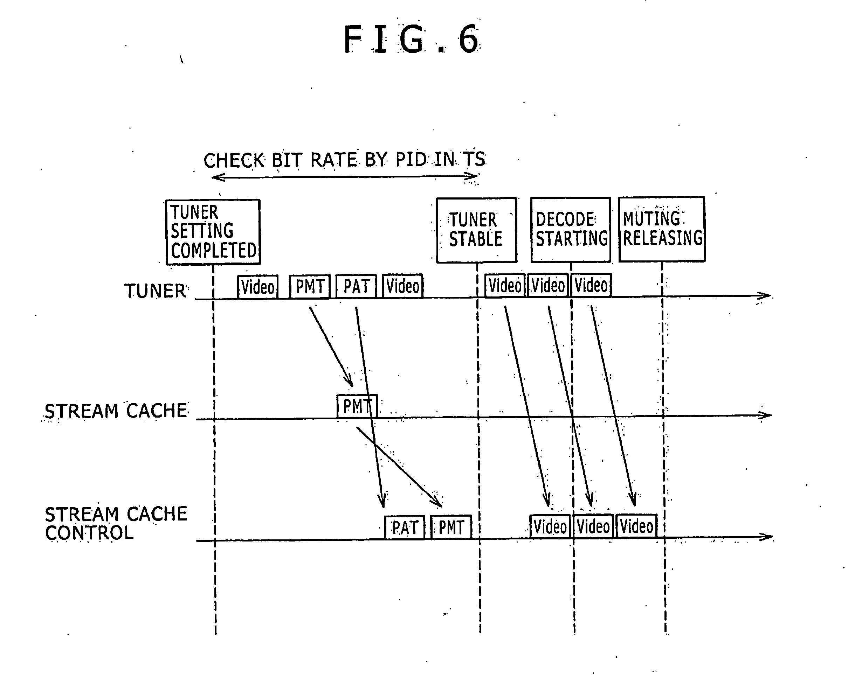

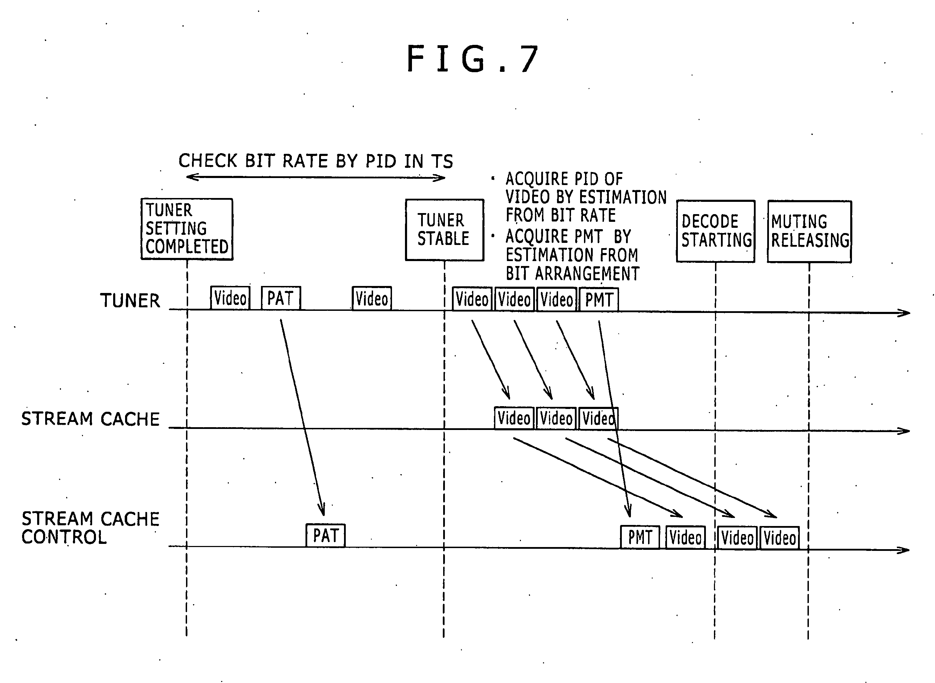

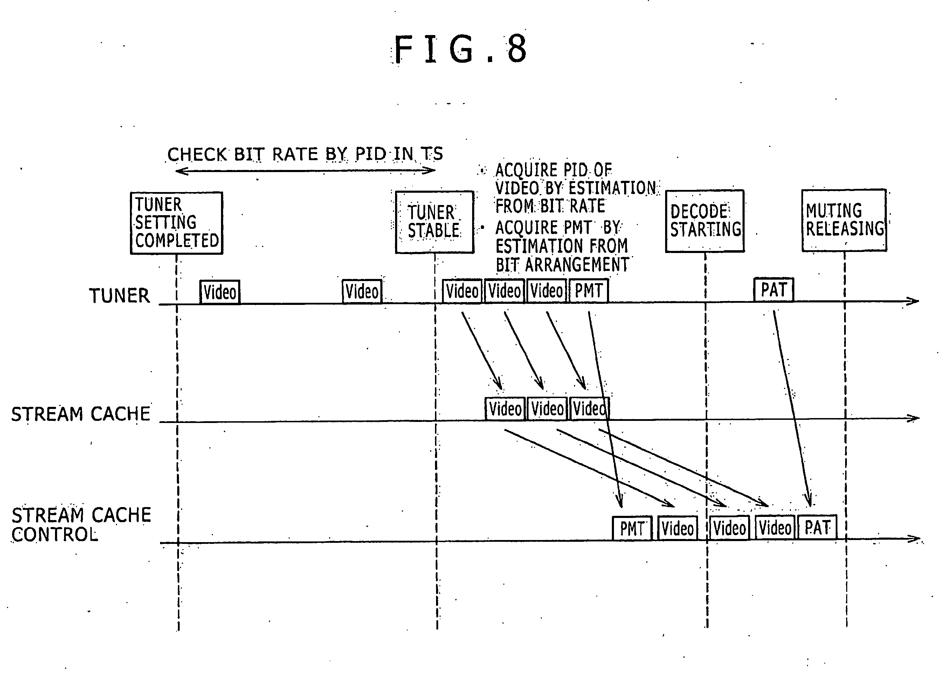

Until the tuner becomes stable, the stream cache control means searches for PAT, uses bit arrangement and the above-described bit rate by PID to estimate PMT, and stores it in the stream cache memory. It does not acquire other packets the while. FIG. 5 shows a flowchart of the stream cache control means. Processing of the stream cache control means falls into four categories, depending on the acquisition of channel selection information such as PAT and PMT, and its timing. The relationship between the acquisitions of PAT and PMT is shown in FIGS. 6 to 8.
(1) The stream cache control means, when it has acquired PAT and PMT (203, 204) until a tuner has been set (200) and becomes stable (202), determines the PID of video from the information, retrieves a relevant packet from among packets sent from the tuner (205), and transfers it to a decoder. Therefore, in this case, the video packet is not stored in the stream cache memory. It starts decoding (206), and when a normal video has been created, releases muting (217). FIG. 6 shows the relationship among the tuner, stream cache control, and acquired data.
(2) The stream cache control means, when it has acquired PAT (203) but cannot acquire PMT (204) until the tuner becomes stable (202), estimates the PID of video by the technique described previously (207), and stores the packet in the stream cache memory. It acquires a PMT containing the PID of video from among PMTS indicated by the PAT (210). If the PID of video indicated by the PMT matches the estimated PID (211), it starts decoding by using packets acquired from the tuner and video packets stored in the stream cache memory (212). When a normal video has been created, it releases muting (217). FIG. 7 shows the relationship among the tuner, stream cache control, and acquired data.
(3) The stream cache control means, when it cannot acquire PAT (203) until the tuner becomes stable (202), estimates the PID of video by the technique described previously (208), and stores the packet in the stream cache memory. When it has acquired PAT earlier than PMT in the course of storing the video packet, and subsequently has acquired PMT containing the PID of video indicated by the PAT (210), if the PID of video indicated by the PMT matches the estimated PID (211), it starts decoding by using packets acquired from the tuner and video packets stored in the memory (212). When a normal video has been created, it releases muting (217).
(4) The stream cache control means, when it cannot acquire PAT (203) until the tuner becomes stable (202), estimates the PID of video by the technique described previously (208), and stores the packet in the stream cache memory. When it has acquired PMT containing the PID of video ES stored before acquiring PAT in the course of storing video packets (213), it starts decoding by using packets acquired from the tuner and the video packets stored in the memory (214). When it acquires PAT (215), an estimate PMT is correct (216), and a normal video has been created, it releases muting (217). FIG. 8 shows the relationship among the tuner, stream cache control, and acquired data.

The stream cache control means acquires other information and videos necessary for channel selection from the tuner (218).

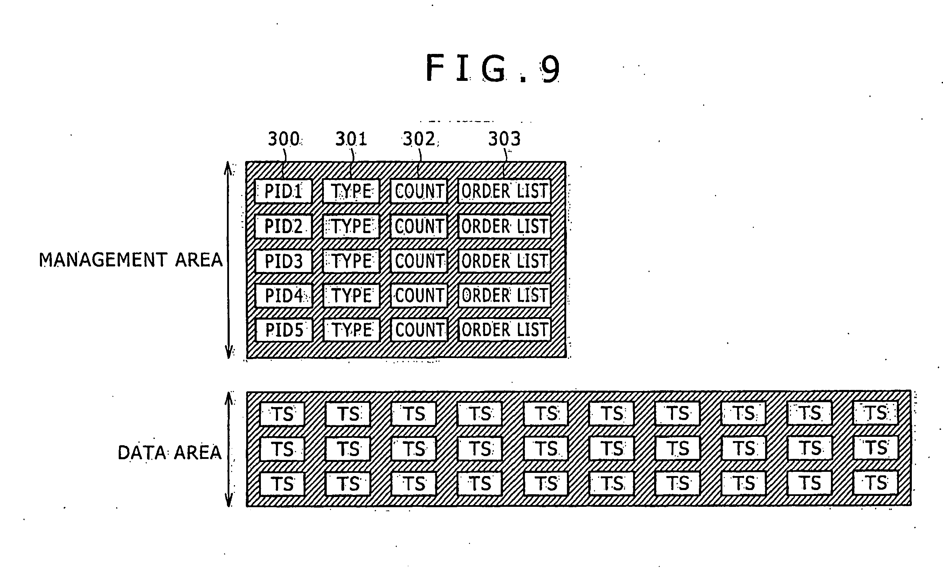

The stream cache memory 105 stores received TS packets in a data area in order as shown in FIG. 9. During storage to the stream cache memory, the type (301), count (302), and reception order (303) of received packets are recorded in a management area for each of PIDs (300). When reading a necessary TS packet, the stream cache control means 104 refers to an acquisition order (303) recorded by PID and transfers a TS packet of the number.

The audio/video decoder 106 decodes received video/audio ES.

The muting releasing means 107 releases video muting when a normal video has been created.

Since only necessary TS packets are acquired at appropriate time by the tuner stability checking means 102, the stream constitution checking means 103, and the stream cache control means 104 through the above-described operations, memory consumption can be curbed. Furthermore, since information necessary for channel selection is acquired using TS packets acquired previously, and decoding can be started using the information even when not all data can be acquired, channel selection time can be reduced.

### Second Embodiment

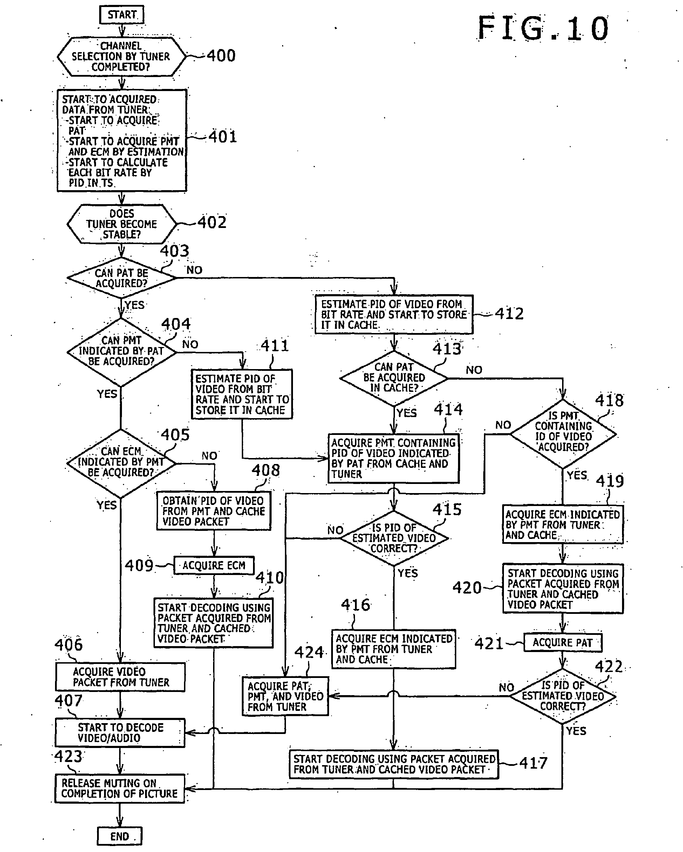

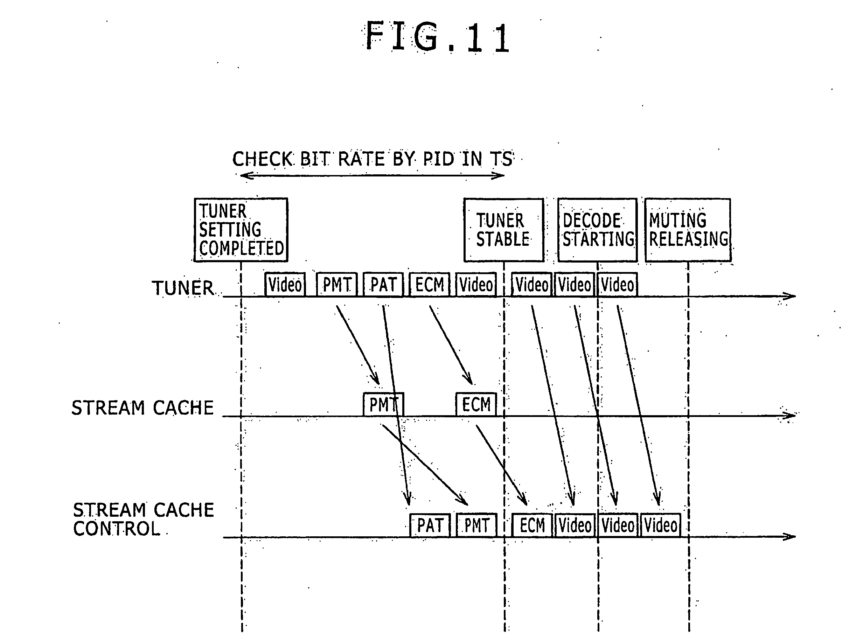

As a second embodiment, the present invention provides a receiver for encoded digital broadcasts such as terrestrial digital broadcasts, BS digital broadcasts, and chargeable broadcasts. Although a block diagram of the digital broadcast receiver is the same as that of FIG. 2, its flowchart is shown in FIG. 10. When the tuner has been set, the search and acquisition of PAT are started. PMT and ECM are searched by bit arrangement and the ratio of PID, and stored in the stream cache memory. Processing of the stream cache control means falls into five categories, depending on the acquisition of channel selection information such as PAT, PMT, and ECM, and its timing.
(1) Until the tuner has been set (400) and becomes stable (402), when the stream cache control means has acquired PAT (403), has acquired PMT containing the PID of video indicated by the PAT (404), and has acquired common information (entitlement control message: hereinafter referred to as ECM) including program information and control information necessary to decode a video packet indicated by the PMT (405), it acquires video ES from the tuner (406) and transfers it to the decoder (407). As a result, in this case, the video packet is not stored in the stream cache memory. It starts decoding and releases muting (423) when a normal video has been created. FIG. 11 shows the relationship among the tuner, stream cache control, and acquired data.
(2) Until the tuner becomes stable (402), when the stream cache control means has acquired PAT and a relevant PMT (403, 404), but cannot acquire video ECM (405), it stores video packets in the stream cache memory (408). On acquiring a relevant ECM (409), it decodes a video ES acquired form the tuner and a video ES stored in the stream cache memory. When information necessary to start decoding a video such as an aspect ratio is contained in the decoded video ES, it sends it to the A/V decoder to start decoding (410). When a normal video has been created, it releases muting (423).
(3) Until the tuner becomes stable (402), when the stream cache control means has acquired PAT (403), but has not acquired PMT containing video information (404), it estimates the PID of video by the technique described previously, and stores the packet in the stream cache memory (411). Next, it acquires PMT containing the PID of video from among PMTs indicated by the PAT (414). If the PID of video indicated by the PMT matches the estimated PID (415), it acquires ECM indicated by the PMT from the stream cache memory and the tuner for decoding (416), and sends it to the A/V decoder to start decoding (417). When a normal video has been created, it releases muting (423).
(4) Until the tuner becomes stable (402), when the stream cache control means cannot acquire PAT (403), it estimates the PID of video by the technique described previously, and stores the packet in the stream cache memory (412). When it acquires PAT previously in the course of storing video packets, then acquires PMT containing the PID of video indicated by the PAT (414), if the PID of video indicated by the PMT matches the estimated PID (415), it acquires a relevant ECM from the stream cache memory and the tuner, and decodes the video packets (416) for decoding (417). When a normal video has been created, it releases muting (423).
(5) Until the tuner becomes stable (402), when the stream cache control means cannot acquire PAT (403), it estimates the PID of video by the technique described previously, and stores the packet in the stream cache memory (412). When it acquires PMT indicating the PID of video ES being stored earlier than acquiring PAT (413) in the course of storing video packets, it acquires ECM indicated by the PMT from the stream cache memory and the tuner (419), and starts decoding (420). If it acquires PAT (421), PMT indicated by the PID of video matches the PID of PMT indicated by PAT (422), and a normal video has been created, it releases muting (423).

The stream cache control means acquires other information and videos necessary for channel selection (424).

The stream cache memory 105 stores received TS packets in a data area in order as shown in FIG. 9. During storage to the stream cache memory, the type (301), count (302), and reception order (303) of received packets are recorded in a management area for each of PIDs (300). When reading a necessary TS packet, the stream cache control means 104 refers to an acquisition order (303) recorded by PID and transfers a TS packet of the number.

The audio/video decoder 106 decodes received video/audio packets. The muting releasing means 107 releases muting when a normal video has been created.

Since only necessary TS packets are acquired at appropriate time by the tuner stability checking means 102, the stream constitution checking means 103, and the stream cache control means 104 through the above-described operations, memory consumption can be curbed. Furthermore, since information necessary for channel selection is acquired using TS packets acquired previously, and decoding can be started using the information even when not all data can be acquired, channel selection time can be reduced.

### Further Example

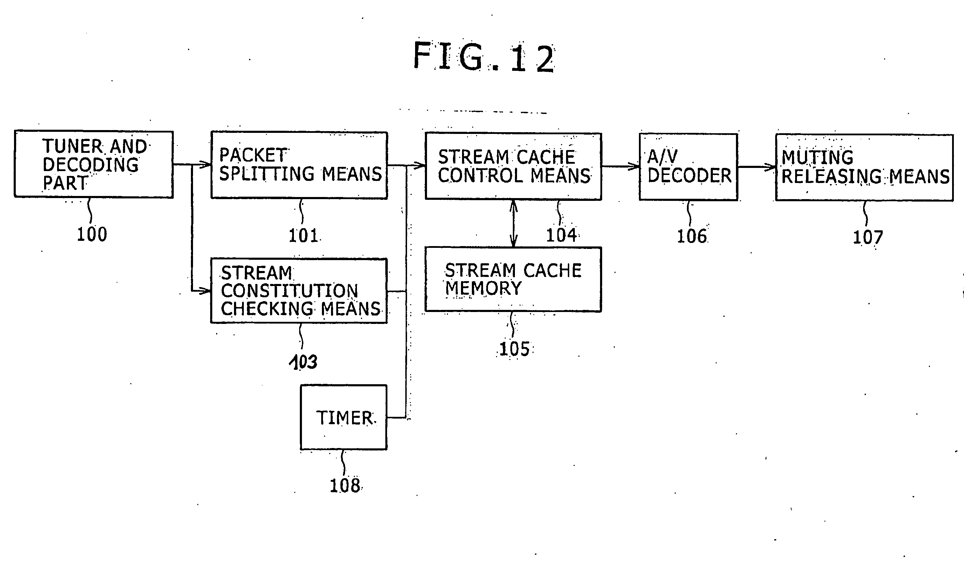

As a further example, the present invention provides a digital broadcast receiver employing a timer without using the tuner stability checking means, as shown in FIG. 12. Depending on platforms, there is a case where other than normal packets cannot be acquired from a tuner, and it is difficult to mount the tuner stability checking means. In that case, a period until the tuner becomes stable is set in a pseudo manner using the timer 108, and the PID of video ES is estimated using the stream constitution checking means 103 and the stream cache control means 104 as in the first and second embodiments. In this way, necessary memory can be saved and high-speed channel selection can be achieved.

Features, components and specific details of the structures of the above-described embodiments may be exchanged or combined to form further embodiments optimized for the respective application.
As far as those modifications are readily apparent for an expert skilled in the art they shall be disclosed implicitly by the above description without specifying explicitly every possible combination, for the sake of conciseness of the present description.

## Claims

1. A digital broadcast receiver comprising:
data input means that inputs digital data containing program specific information;
packet splitting means (101) that splits inputted digital data in units of transport stream packets for transfer, wherein the transport stream packets each have a packet identifier (PID) of the program specific information;
tuner stability checking means (102) that determines a number of normal packets and a number of corrupt packets of acquired transport stream packets;
stream constitution checking means (103) that checks the PID of the normal packets for a specific period of time to determine ratios of them and estimates bit rates of packets by the PID in the transport streams from the ratios and the number of the normal packets acquired from the tuner stability checking means (102);
a stream cache memory (105) that stores specific transport stream packets acquired from the data input means;
stream cache control means (104) that determines when to acquire which of the packets acquired from the data input means for transfers to the stream cache memory (105) and a decoder;
an A/V decoder (106) that decodes video information; and
a mute control means (107) that outputs the decoded information to users,
wherein the stream cache control means (104) estimates a PID of a video packet of video elementary stream from the bit rates and a bit arrangement indicating the elementary stream even when information necessary for channel selection is not acquired, determines when to store and output which transport packet, and outputs the transport packet to the decoder.

2. The digital broadcast receiver according to claim 1,
wherein the stream cache control means (104) determines, from information of the tuner stability checking means (102) and the stream constitution checking means (103), when to store and read which transport stream packet in or from the stream cache memory (105) for transfer to the decoder, and transfers the packet.

3. The digital broadcast receiver according to claim 1 or 2,
wherein the stream cache memory (105) is split into a management area and a data area, an acquisition order is recorded in the management area by the identifier of transport stream packet, and transport packets are collectively recorded in the data area in the order of acquisition.

## Patentansprüche

1. Digitaler Rundfunkempfänger mit:
einer Dateneingabeeinrichtung, welche digitale Daten eingibt, die programmspezifische Information enthalten;
einer Paketspalteinrichtung (101), die eingegebene digitale Daten in Einheiten von Transportstrompaketen spaltet, wobei die Transportstrompaketejeweils eine Paketkennung (PID) der programmspezifischen Information aufweisen;
einer Kanalwählerstabilitäts-Prüfeinrichtung (102), die eine Anzahl normaler Pakete und eine Anzahl beschädigter Pakete von erfassten Transportstrompaketen bestimmt;
eine Strombeschaffenheits-Prüfeinrichtung (103), die die PID der normalen Pakete eine spezifische Zeitspanne lang prüft, um Verhältnisse von diesen zu bestimmen, und Bitgeschwindigkeiten von Paketen durch die PID in den Transportströmen aus den Verhältnissen und der Anzahl der normalen Pakete schätzt, die von der Kanalwählerstabilitäts-Prüfeinrichtung (102) erhalten werden;
einem Stromcachespeicher (105), der spezifische Transportstrompakete, die von der Dateneingabeeinrichtung erfasst werden, speichert;
einer Stromcache-Steuereinrichtung (104), welche bestimmt, wann welches der von der Dateneingabeeinrichtung erfassten Pakete für Übertragungen an den Stromcachespeicher (105) und einen Dekodierer erfasst werden sollen;
einen A/V-Dekodierer (106), der Videoinformation dekodiert; und
eine Stummsteuereinrichtung (107), die die dekodierte Information an Benutzer ausgibt,
wobei die StromcacheSteuereinrichtung (104) eine PID eines Videopakets eines Videoelementarstroms aus den Bitgeschwindigkeiten und einer Bitanordnungschätzt, die den Elementarstrom selbst dann angibt, wenn zur Kanalauswahl notwendige Information nicht erfasst wird, die bestimmt, wann welches Transportpaket gespeichert und ausgegeben werden soll, und das Transportpaket an den Dekodierer ausgibt.

2. Digitaler Rundfunkempfänger nach Anspruch 1,
wobei die Stromcache-Steuereinrichtung (104) aus Information der Kanalwählerstabilitäts-Prüfeinrichtung (102) und derStrombeschaffenheits-Prüfeinrichtung (103) bestimmt, wann für die Übertragung an den Dekodierer welches Transportstrompaket in den Stromcachespeicher (105) gespeichert oder aus dem Stromcachespeicher (105) gelesen werden soll, und das Paket überträgt.

3. Digitaler Rundfunkempfänger nach Anspruch 1 oder 2,
wobei der Stromcachespeicher (105) in einen Verwaltungsbereich und einen Datenbereich gespalten ist, eine Erfassungsreihenfolge im Vorwaltungsbereich von der Kennung des Transportstrompakets aufgezeichnet wird und Transportpakete kollektiv im Datenbereich in der Reihenfolge der Erfassung aufgezeichnet werden.

## Revendications

1. Récepteur de diffusion numérique comportant :
des moyens d'entrée de données qui entrent des données numériques contenant des informations spécifiques à un programme,
des moyens de séparation de paquets (101) qui séparent des données numériques entrées en unités de paquets de flux de transport en vue d'un transfert, dans lequel les paquets de flux de transport ont tous un identifiant de paquet (PID) des informations spécifiques à un programme,
des moyens de contrôle de stabilité de syntoniseur (102) lesquels déterminent un nombre de paquets normaux et un nombre de paquets corrompus parmi les paquets de flux de transport acquis,
des moyens de contrôle de constitution de flux (103) lesquels contrôlent l'identifiant PID des paquets normaux pendant une période de temps spécifique afin de déterminer des rapports de ceux-ci et estiment des débits binaires de paquets par l'intermédiaire de l'identifiant PID dans les flux de transport à partir des rapports et du nombre des paquets normaux acquis par les moyens de contrôle de stabilité de syntoniseur (102),
une mémoire cache de flux (105) laquelle mémorise des paquets de flux de transport spécifiques acquis par les moyens d'entrée de données,
des moyens de commande de cache de flux (104) lesquels déterminent à quel moment et quel paquet acquérir parmi les paquets acquis par les moyens d'entrée de données en vue d'un transfert vers la mémoire cache de flux (105) et un décodeur,
un décodeur A/V (106) qui décode des informations vidéo, et
des moyens de commande de silence (107) qui délivrent en sortie les informations décodées à des utilisateurs,
dans lequel les moyens de commande de cache de flux (104) estiment un identifiant PID d'un paquet vidéo de flux élémentaire vidéo à partir des débits binaires et d'un agencement de bits indiquant le flux élémentaire même lorsque les informations nécessaires en vue d'une sélection de canaux ne sont pas acquises, déterminent à quel moment et quel paquet de transport mémoriser et délivrer en sortie, et délivrent en sortie le paquet de transport au décodeur.

2. Récepteur de diffusion numérique selon la revendication 1, dans lequel les moyens de commande de cache de flux (104) déterminent, à partir d'informations des moyens de contrôle de stabilité de syntoniseur (102) et des moyens de contrôle de constitution de flux (103), à quel moment mémoriser un paquet de flux de transport dans la mémoire cache de flux (105) et lire un paquet de flux de transport à partir de celle-ci en vue d'un transfert vers le décodeur, et transfèrent le paquet.

3. Récepteur de diffusion numérique selon la revendication 1 ou 2,
dans lequel la mémoire cache de flux (105) est sépare en une zone de gestion et en une zone de données, un ordre d'acquisition est enregistré dans la zone de gestion par l'identifiant de paquet de flux de transport, et des paquets de transport sont enregistrés de manière collective dans la zone de données dans l'ordre d'acquisition.
